# EUROPEAN PATENT APPLICATION

(11) **EP 2 360 395 A1**
(43) Date of publication of application: **24.08.2011**
(21) Application number: 10808963.2
(22) Date of filing: 29.10.2010
(51) Int. Cl.: F16H 25/22

(54) **BALL SCREW**

(30) Priority: 25.12.2009 JP 2009294037; 22.01.2010 JP 2010012167; 19.02.2010 JP 2010034491
(71) Applicant: NSK Ltd., Tokyo 141-8560 (JP)
(72) Inventor: SAKURAI, Yuichi, Gunma 371-8527 (JP)
(74) Representative: Klingseisen, Franz
(86) International application number: PCT/JP2010/006420
(87) International publication number: WO 2011/077622

(57) **Abstract**

A ball screw is provided which is able to prevent loosing of a bolt for fixing a deflector to reduce noise, and to endure high-speed working conditions. A female hole (13) is formed in a deflector (9) arranged, with the both ends thereof joined together, at a position of the both ends of the ball returning member (5) on an inner peripheral surface of the nut (2). The deflector (9) is fixed to the nut (2) with two bolts (11) inserted into a bolt insertion hole (15) formed on the nut (2). A cross-section perpendicular to a scooping-up direction of the scooping-up surface (19) of the deflector (9) has a concave curved surface having a radius of curvature slightly larger than a radius of the ball (8). The concave curved surface is of a shape of scooping up the ball (8) ejected from the ball rolling path (3) in a tangential direction of a screw line. The deflector (9) may be made of resin material.

## Description

### BACKGROUND OF THE INVENTION

### Field of the Invention

The present invention relates to a ball screw, in particular to a ball screw with a deflector.

### Related Art

Conventionally, it has been generally known a tube recirculation-type ball screw as a ball screw. A scooping-up site of a ball in a tube of the tube recirculation-type ball screw is formed by machining a tip of the tube made of a thin-walled metal tube or thin plate metal in tongue shape.
The scooping-up site, however, entails a problem that the scooping-up site experiences the unsatisfactory strength due to continuous collision of the ball when featured such scooping-up site in a high-load capacity and high-speed ball screw where the a large ball is furnished and the ball collides against a tongue at a high-speed.

A prior art devised for improving the scooping-up site includes a ball disclosed in Patent Document 1. As shown in FIGS.3 to 5, the ball screw (nut assembly) 110 has a screw 114 on a peripheral face of which a groove 114 is spirally formed and a nut 118. The nut 118 has a spiral grove 120 formed on its peripheral surface correspondingly to the groove 114. A plurality of balls 122 are disposed in a transfer path configured by the groove 114 and the groove 120. The transfer path is also provided with a circular tube 126 for returning back a ball 122 from a starting point to an end point. The ball screw (nut assembly) 110 is provided with a deflector (ball turning device) 130 in place of a tongue (not shown) of the recirculation tube 126. The deflector 130 is composed of a body 132 formed by bending in saddle shape a rod (usually, steel material) having a substantially circular cross-section and a screwed shaft 134.

Scooping up the ball 122 with the both ends of the body 132 does not invite the defect of unsatisfactory strength, even in the case of the high-load capacity and the high-speed ball screw, as with the tongue.

### Prior Art Document

### Patent Document

Patent Document 1: Patent Application Publication No. H4-228963

### Summary of the Invention

### Problem to be Solved

In the ball screw disclosed in Patent Document 1, a fixing bolt for the deflector is provided by one at the center of the deflector. Hence, the ball screw, however, is in danger of generating vibrations in the deflector when the deflector scoops up a ball, which may loosen the fixing bolt.
Further, in the prior art, the scooping-up site of the deflector has a plane and therefore is not to be able to scoop up a ball along a screw line of the ball screw. Thus, when scooping up the ball, the ball draws a discontinuous locus, which induces problems that the scooping-up site is not qualified for high-speed use. Namely, the problems include the generation of noise, an incidence of scratch on a surface of the ball due to collision against the scooping-up site, and gripping of small pieces resulted from scraping off of the tongue in the ball grooves etc.

The present invention has made to solve the defects as such and an object thereof is to provide a ball screw preventing a fixing bolt of a deflector from being loosened.
Further, another object of the present invention is to provide a ball screw capable of implementing smooth scooping up of a ball by the deflector for noise reduction and to endure high-speed working conditions.

### Solution to the Problem

A ball screw according to one aspect of the present invention comprises a screw shaft having a spiral ball groove formed on its outer peripheral surface; a nut having a spiral ball groove opposing the ball screw groove of the screw shaft on its inner peripheral surface; a number of balls rolling along a spiral ball rolling path formed by the ball groove of the nut and the ball groove of the screw shaft; and a recirculation component provided on the nut for guiding so that the number of balls recirculate along the ball rolling path,
wherein the recirculation component is composed of a deflector scooping up the balls and a ball returning member returning back the scooped up balls to the ball rolling path, and the deflector is fixed to the nut by a plurality of fixing members.

A ball screw according to another aspect of the present invention comprises a screw shaft having a spiral ball groove formed on its outer peripheral surface; a nut having a spiral ball groove opposing the ball screw groove of the screw shaft on its inner peripheral surface; a number of balls rolling along a spiral ball rolling path formed by the ball groove of the nut and the ball groove of the screw shaft; and a recirculation component provided on the nut for guiding so that the number of balls recirculate along the ball rolling path,
wherein the recirculation component is composed of a deflector scoping up the balls and a ball returning member returning back the scooped up balls to the ball rolling path, and the deflector has a shape of scooping up the ball in the ball rolling member along a screw line toward the ball returning member.

In the ball screw according to yet another aspect of the present invention, a through hole of the nut opposing the ball scooping-up surface of the deflector has a concave curved surface shape of scooping up the ball in the ball rolling path along the screw line toward the ball returning member.
In the ball screw according to yet another aspect of the present invention, the ball scooping-up surface of the deflector has a concave curved surface shape of scooping up the ball in the ball rolling path along the screw line toward the ball returning path.
In the ball screw according to still another aspect of the present invention, the deflector is formed of resin material.

### Advantageous Effects of the Invention

According to the ball screw of one embodiment of the present invention, the invention enables providing a deflector-type ball screw which is free from the generation of vibrations in the deflector and wipes out loosing of the fixing bolt, owing to the plural fixing members of the deflector.
According to the ball screw of another embodiment of the present invention, the invention allows providing a deflector-type ball screw capable of smoothly scooping up the ball with the deflector for noise reduction and to withstand high-speed working conditions.

### Brief Description of the Drawings

FIG. 1 is a sectional view showing an arrangement of a ball recirculation component of a ball screw according to the embodiment of the present invention;
FIG. 2 is a drawing showing an arrangement of a deflector into which a bolt is inserted according to the embodiment of the present invention, in which FIG. 2A is a plan view, FIG. 2B is a front view, and FIG. 2C is a side view;

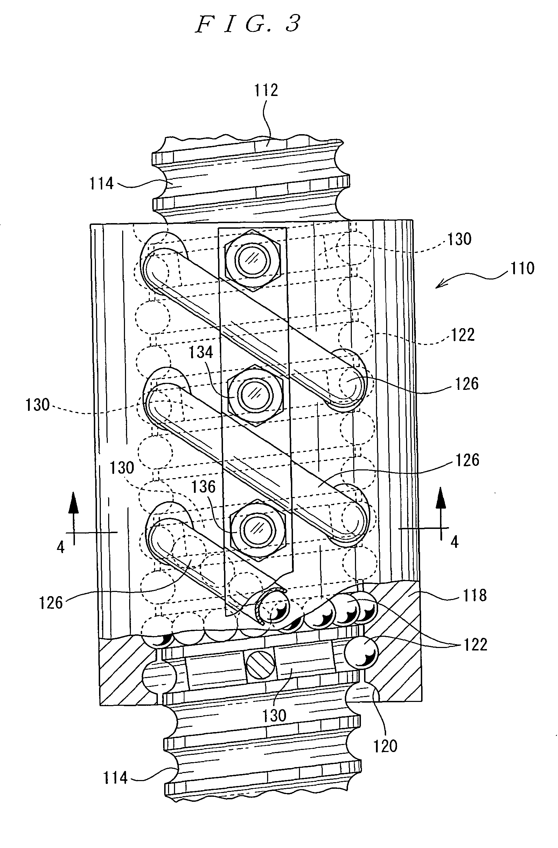

FIG. 3 is a plan view showing an arrangement of a ball screw disclosed in Patent Document 1;

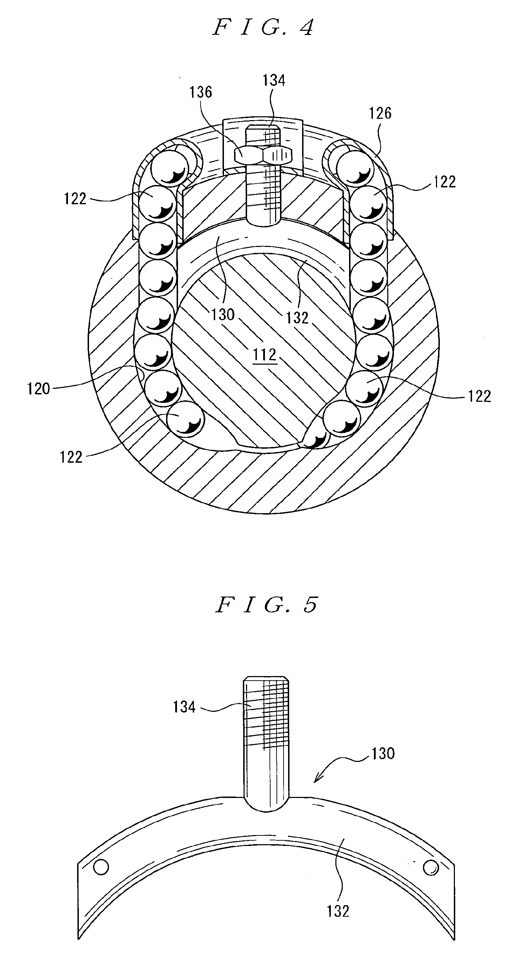

FIG. 4 is a sectional view taken along a line of 4-4 of FIG. 3; and
FIG. 5 is a side view showing an arrangement of a deflector disclosed in Patent Document 1.

### Description of Embodiments

### First Embodiment

Hereinafter, a description will be made to the first embodiment of the ball screw according to the present invention with reference to the accompanying drawings.

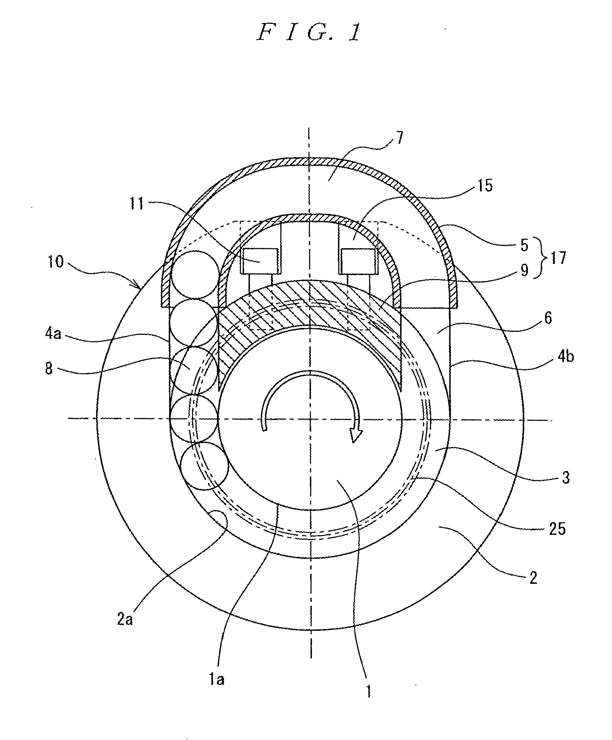

As shown in FIG. 1, a nut 2 is fitted to an outer periphery of a screw shaft 1. A spiral ball groove 1a is formed on an outer peripheral surface of the screw shaft 1, and a spiral boll screw groove 2a opposing the ball screw groove 1a of the screw shaft 1 is formed on an inner peripheral surface of the nut 2. The ball screw groove 1a of the screw shaft 1 and the ball screw groove 2a of the nut 2 opposing each other constitute a spiral ball rolling path 3.

Through holes 4a and 4b are formed on a peripheral wall of the nut 2 and the through holes 4a and 4b are connected with a ball returning member 5. The ball returning member 5 is made by bending a metal tube in substantially U-shape arranged on an outer peripheral surface of the nut 2 and the both ends thereof are inserted into the through holes 4a and 4b.
Moreover, the deflector 9 is disposed on the inner peripheral face of the nut 2, with the both ends thereof joined together, at a position of the both ends of the ball returning path 5, and is fixed to the nut 2 with the bolt 11 that is a fixing member.

The deflector 9 is formed by bending arcuately a metal rod whose cross-section is of a substantially elliptical form is bent. The balls 8 in the ball rolling path 3 are scooped up by the both ends of the deflector 9 and is guided to the ball returning member 5. By the ball returning member 5 the balls 8 are returned back again to the ball rolling path 3. The deflector 9 and the ball returning member 5 constitute a recirculation component 17.
The through holes 4a and 4b and the recirculation component 17 constitute a connection path 6 connecting a part and another part remote from each other of the ball rolling path 3 to communicate with itself.

Thereby, the ball rolling path 3 communicates with itself in an endless manner through the connecting path 6 and the ball rolling path communicating in the endless manner is a ball recirculation path 7. In the ball recirculation path 7, a large number of balls 8 made of materials such as steel and ceramic etc., are accommodated in the ball rolling path 3 so as to continuously align in the endless manner therein. These balls 8 are endlessly recirculate in the ball recirculation path 7 when the screw shaft 1 is rotated. The endless recirculation of the balls 8 in the recirculation path 7 permits relative movement of the nut 2 along the screw shaft 1 with respect to the screw shaft 1.

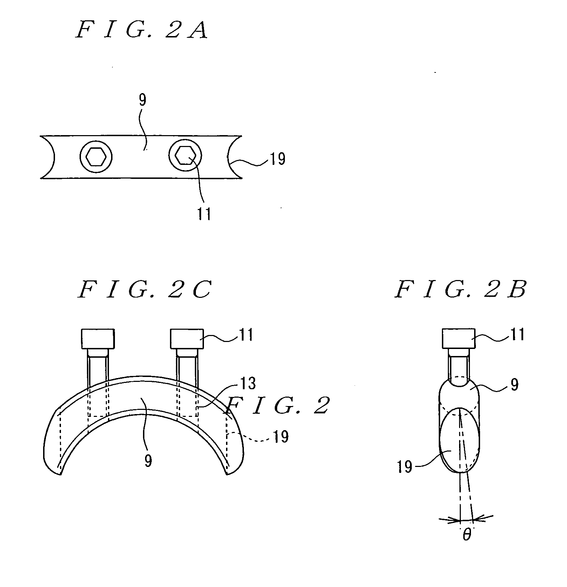

As shown in FIGS. 2A, 2B, and 2C, two female holes 13 are formed in the deflector 9 and the deflector 9 is fixed to the nut 2 by the two bolts 11 inserted into two bolt insertion holes 15 formed on the nut 2.
The deflector (ball turning device) 130 of the ball screw disclosed in Patent Document 1 is fixed to the nut 118 by a fixing bolt provided by one at the center of the deflector (ball turning device) 130.
In contrast, the deflector 9 of the ball screw according to the present invention is fixed to the nut 2 by a plurality of fixing members (bolts 11). This avoids the generation of vibrations in the deflector 9, sweeping away a fear of loosening of the fixing member (bolt 11).

As mentioned above, in the embodiment of the present invention, an example is given where the deflector 9 is fixed by using the bolt 11 as a fixing technique thereof. Alternatively, the deflector 9 may be fastened and fixed by the nut (threaded fastener 136) to a threaded grip 134 integrally provided therewith as a fixing member like the deflector 130 disclosed in Patent Document 1 in place of the bolt 1.
Also, whereas in the instant embodiment, an example is described in which two bolts 11 are used as a fixing member, it may be three or more, not necessarily limited to two.

### Second Embodiment

Hereinafter, a description of a second embodiment of the ball screw according to the present invention will next be made referring to the drawings.
As shown in FIG. 1, the nut 2 is fitted on an outer peripheral surface of the screw shaft 1. A spiral ball screw groove 1a is formed on an outer peripheral surface of the screw shaft 1, and a spiral ball screw groove 2a opposing the ball screw groove 1a of the screw shaft 1 is formed on an inner peripheral surface of the nut 2. Thus, the screw ball groove 1a of the screw shaft 1 and the ball screw groove 2a of the nut 2 opposing to each other constitute the spiral ball rolling path 3.

Through holes 4a and 4b are formed On a peripheral wall of the nut 2, which are connected by the ball returning member 5. The ball returning member 5 is made by bending a metal tube in substantially U-shape and arranged on a periphery of the nut 2. The both ends thereof are inserted into the through holes 4a and 4b.
Further, the deflector 9 is arranged on the inner peripheral surface of the nut 2, with the both ends thereof joined together, at a position of the both ends of the ball returning member 5. The deflector 9 is fixed to the nut 2 by the bolt 11 as a fixing member.

The deflector 9 is made by bending arcuately a metal rod whose cross-section is of a round shape. The balls 8 in the ball rolling path 3 are scooped up through the both ends of the deflector 9 to guide it to the ball returning member 5. The balls 8 are returned back again to the ball rolling path 3 with the ball returning member 5. The deflector 9 and the ball returning member 5 constitute the recirculation component 17.
The through holes 4a and 4b and the recirculation component 17 constitute the connecting path 6 in which a part and another part of the ball rolling path 3 remote from each other are connected to communicate with itself.

Thereby, the ball rolling path 3 communicates with itself in an endless manner via the connecting path 6. The path communicating in the endless manner is the ball recirculation path 7. A large number of balls 8 made of materials such as steel and ceramic etc., are accomodated in the ball recirculation path 7 so as to continuously align in the endless manner in the ball recirculation path 7 and roll in the ball rolling path 7 for endless recirculation when the screw shaft 1 is rotated.
The endless recirculation of the balls 8 in the ball recirculation path 7 allows relative movement of the nut 2 along the screw shaft 1 relative to the screw shaft 1.

As shown in FIGS. 2A, 2B, and 2C, the deflector 9 has two female holes 13 formed thereon with which the deflector 9 is fixed to the nut 2 by two bolts 11 inserted into the two bolt insertion holes 15 formed on the nut 12.
The deflector (ball turning device) 13 of the ball screw disclosed in Patent Document 1 is fixed to the nut 118 by the fixing bolt provided by one at the center of the deflector (ball returning device)130.

On the contrary, in the ball screw of the present invention, the deflector 9 is fixed to the nut 2 by the plurality of fixing members (bolts 11). This avoids the generation of vibrations in the deflector 9, seeping away a fear of loosening of the fixing members (bolts 11).
As shown in FIG. 2A, a cross-section perpendicular to a scooping-up direction of the ball 8 of the scooping-up surface 19 of the deflector 9 is a concave curved surface having a radius of curvature slightly larger than a radius of the ball 8. This concave curved surface is of a shape of scooping up the ball 8 in a tangential direction of a screw line of the ball 8 ejected from the ball rolling path 3.

Moreover, a cross-section perpendicular to a according-up direction of the ball 8 of the through holes 4a and 4b of the nut 2 opposing the scooping-up surface 19 of the deflector 9 is a concave curved surface having a radius of curvature slightly larger than a radius of the ball 8, as with the scooping-up surface of the deflector 9. The concave curved surface is of a shape of scooping up the ball 8 ejected from the ball rolling path 3 in a tangential direction of the screw line.
Herein, the screw line refers to a center locus of the spiral ball moving in the ball rolling path 3. The tangential direction of the screw line is, more specifically, a tangential direction of a diameter 25 of a pitch circle of the ball 8 in the ball rolling path 3 in FIG. 1, and a direction slant just a lead angle of θ of ball groove 1a of the ball shaft 1.

In the present embodiment, the cross-section perpendicular to the scooping-up direction of the ball 8 of the scooping-up surface 19 of the deflector 9 and the surface of the through holes 4a and 4b of the nut 2 facing the scooping-up surface are the concave curved surface having the radius of curvature slightly larger than the radius of the ball 8. The concave curved surface is of the shape of scooping up the ball 8 ejected from the ball rolling path 3 in the tangential direction of the screw line. Nonetheless, the concave curved surface has only to be provided at least in the through holes 4a and 4b of the nut 2. The scooping-up surface 19 of the deflector 9 may be a plane scooping up the ball 8 in the tangential direction of the screw line.

In this way, the balls 8 ejected from the ball rolling path 3 are scooped up in the tangential direction by the deflector 9. Therefore, the arrangement provides a deflection-type ball screw capable of smoothly scooping up the ball 8 for noise reduction and of being endure high-speed working conditions.
Furthermore, in addition to that the deflector 9 is fixed to the nut 2 by the plurality of fixing members (bolts 11), the ball 8 is smoothly scooped up along the screw line, which suppresses the generation of vibrations in the deflector 9, further preventing loosening of the fixed bolt.

### Third Embodiment

Hereinafter, a description of a third embodiment of the ball screw according to the present invention will be made referring to drawings.
As shown in FIG. 1, the nut 2 is fitted to the outer peripheral surface of the screw shaft 1. The spiral ball screw grove 1a is formed on the outer peripheral surface of the screw shaft 1, and the spiral ball groove 2a opposing the spiral ball groove 1a of the screw shaft 1 is formed on the inner peripheral surface of the nut 2. Then, the ball screw groove 1a of the screw shaft 1 and the ball screw groove 2a of the nut 2 constitute the spiral ball rolling path 3.

The through holes 4a and 4b are formed at the peripheral wall of the nut 2, which are connected with ball returning member 5. The ball returning member 5 is made by bending the metal tube in substantially U-shape and is arranged at a periphery of the nut 2. The both ends thereof are inserted into the through holes 4a and 4b.
Furthermore, the deflector 9 is arranged on the inner peripheral surface of the nut 2, with the both ends thereof joined together, at a position of the both ends of the ball returning member 5, and is fixed to the nut 2 by the bolt 11 that is a fixing member.

The deflector 9 is of a round shape in a right-angled cross-section with respect to a longitudinal direction, and has a partially arcuate shape on the whole. The deflector 9 is molded by resin materials (e.g., engineering plastic such as polyacetal resin and reinforcing material contained polyamide resin). The balls 8 in the ball rolling path 3 are scooped up by the both ends of the deflector 9 and is guided to the ball returning member 5. The returning member 5 returns back again the balls 8 to the ball rolling path 3. The deflector 9 and the ball returning member 5 constitute the recirculation component 17.

The through holes 4a and 4b and recirculation component 17 constitute the connecting part 6 connecting a part and another part remote from each other to communicate with itself.
Thereby, the ball rolling path 3 communicates with itself in the endless manner through the connecting path 6. The path connected in the endless manner is the ball recirculation component 7. A large number of balls 8 made of materials such as steel and ceramic etc., are accommodated in the ball recirculation path 7 so as to continuously align in the endless manner therein, and roll in the ball recirculation path 7 when the screw shaft 1 is rotated for endless recirculation.
The endless recirculation of the balls 8 in the ball recirculation path 7 enables relative movement of the nut 2 along the screw shaft 1 with respect to the screw shaft 1.

As shown in FIGS. 2A, 2B, and 2C, the deflector 9 has two female screw holes 3 formed therein with which the deflector 9 is fixed to the nut 2 by two bolts 11 inserted into the two bolt insertion holes 15 formed on the nut 2.
The deflector 130 (ball returning device) 130 of the ball screw disclosed in Patent Document 1 is fixed to the nut 118 by the fixing bolt provided by one at the center thereof.

On the contrary, in the ball screw of the present invention, the fixation of the deflector 9 to the nut 2 by the plurality of fixing members (bolts 11) suppress the generation of vibrations in the deflector 9, thereby eliminating a fear of loosening the fixing members (bolts 11).
The cross-section perpendicular to the scooping-up direction of the ball 8 of the scooping-up surface 19 of the deflector 9 is, as shown in FIG. 2A, of a shape of concave curved surface having the radius of curvature slightly larger than the radius of the ball 8. The concave curved surface is of a shape of scooping up the ball 8 ejected from the ball rolling path 2 in a tangential direction.

Further, the cross-section perpendicular to the scooping-up direction of the ball 8 of the through holes 4a and 4b of the nut 2 opposing the scooping-up surface 19 of the deflector 9, as with the scooping-up surface 19 of the deflector 9, are a concave curved surface having the radius of curvature slightly larger than the radius of the ball 8. The concave curved surface is of a shape of scooping up the ball 8 ejected from the ball rolling path 3 in a tangential direction of the screw line.
Herein, the screw line refers to a central locus of the spiral ball moving in the ball recirculation path 3. The tangential direction of the screw line is, more specifically, a tangential direction of a diameter 25 of a pitch circle of the ball 8 in the ball rolling path 3, in FIG. 1, and a direction slant just a lead angle of θ of the ball screw groove 1a of the screw shaft 1, as shown in FIG. 2B.

In the instant embodiment, the cross-section perpendicular to the scooping-up direction of the ball 8 of the scooping-up surface 19 of the deflector 9 and the surface of the through holes 4a and 4b of the nut 2 opposing the scooping-up surface are the concave curved surface having the radius of curvature slightly larger than the radius of the ball 8. The concave curved surface are of a shape of scooping up the ball 8 ejected from the ball rolling path 3 in the tangential direction of the screw line. Nonetheless, it has only to provide the concave curved surface of scooping up the balls 8 in the tangential direction of the ball line at least in the through holes 4a and 4b of the nut 2. Instead, the scooping-up surface 19 of the deflector 9 may be a surface of scooping up the ball 9 in a tangential direction of the screw line.

In this way, scooping up of the ball 8 ejected from the ball rolling path 3 by the deflector 9 in the tangential direction of the screw line reduces noise owing to smooth scooping up of the ball 8, which provides a deflector-type ball screw capable of withstanding high-speed working conditions. Moreover, the formation of the deflector 8 with resin material further reduces noise in corporation with scooping up of the ball in the tangential direction of the screw line.

In addition to the fixation of the deflector 9 to the nut 2 by the plurality of fixing members (bolts 11), smooth scooping up of the ball 8 along the screw line avoids the generation of vibrations in the deflector 9, still more preventing loosening of the fixing bolt.
While the description of the embodiments of the present invention has made haretofore, the present invention may have various modifications and improvements, not necessarily limited thereto.

### Industrial Applicability

The present invention can find its wide application to various mechanical devices as the ball screw with the recirculation-type deflector.

### Reference Signs List

1: Ball shaft
1a: Ball screw groove (at screw shaft side)
2: Nut
2a: Ball screw groove (at nut side)
3: ball rolling path
5: Ball returning member
8: Ball
9: deflector
10: Ball screw
11: Fixing member (bolt)
17: Recirculation component
19: Scooping-up surface

## Claims

1. A ball screw comprising:
a screw shaft having a spiral ball groove formed on its outer peripheral surface;
a nut having a spiral ball groove opposing the ball screw groove of the screw shaft on its inner peripheral surface;
a number of balls rolling along a spiral ball rolling path formed by the ball groove of the nut and the ball groove of the screw shaft; and
a recirculation component provided on the nut for guiding so that the number of balls recirculate along the ball rolling path,
wherein the recirculation component is composed of a deflector scooping up the balls and a ball returning member returning back the scooped up balls to the ball rolling path, and the deflector is fixed to the nut by a plurality of fixing members.

2. A ball screw comprising:
a screw shaft having a spiral ball groove formed on its outer peripheral surface;
a nut having a spiral ball groove opposing the ball screw groove of the screw shaft on its inner peripheral surface;
a number of balls rolling along a spiral ball rolling path formed by the ball groove of the nut and the ball groove of the screw shaft; and
a recirculation component provided on the nut for guiding so that the number of balls recirculate along the ball rolling path,
wherein the recirculation component is composed of a deflector scooping up the balls and a ball returning member returning back the scooped up balls to the ball rolling path, and the deflector has a shape of scooping up the balls in the ball rolling member along a screw line toward the ball returning member.

3. The ball screw according to claim 2, wherein a through hole of the nut opposing the ball scooping-up surface of the deflector has a concave curved surface shape of scooping up the ball in the ball rolling path along the screw line toward the ball returning member.

4. The ball screw according to claim 2 or 3, wherein the ball scooping-up surface of the deflector has a concave curved surface shape of scooping up the ball in the ball rolling path along the screw line toward the ball returning path.

5. The ball screw according to any one of claims 2 to 4, wherein the deflector is formed of resin material.
